# EUROPÄISCHE PATENTSCHRIFT

(11) **EP 1 584 553 B1**
(45) Veröffentlichungstag und Bekanntmachung des Hinweises auf die Patenterteilung: **31.08.2016**
(21) Anmeldenummer: 05006518.4
(22) Anmeldetag: 24.03.2005
(51) Int. Cl.: B64D 11/00, B64D 11/06, B60R 11/02

(54) **Fahrzeugsitzsystem, insbesondere für Luftfahrzeuge**
Vehicle seating system, in particular for aircraft
Ensemble de sièges pour véhicule, en particulier pour aéronef

(30) Priorität: 07.04.2004 DE 102004017078
(43) Veröffentlichungstag der Anmeldung: 12.10.2005
(73) Patentinhaber: Recaro Aircraft Seating GmbH & Co. KG, 74523 Schwäbisch Hall (DE)
(72) Erfinder: Achilles, Sven, Trophy Club Texas 76262 (US); Schürg, Hartmut, 74523 Schwäbisch Hall (DE)
(74) Vertreter: Daub, Thomas

(56) Entgegenhaltungen:
- DE-U1- 20 317 794
- US-A- 5 374 104
- US-A1- 2003 030 306
- US-A1- 2003 094 843
- US-B1- 6 409 242

## Beschreibung

Die Erfindung bezieht sich auf ein Fahrzeugsitzsystem, insbesondere für Luftfahrzeuge, mit Sitzkomponenten wie Rückenlehne und Sitzteil, das zumindest an einer Seite durch eine eine Armlehne bildende Konsole begrenzt ist, wobei ein armartiges Funktionsteil vorhanden ist, das auskragend zumindest teilweise oberhalb der Kopfebene eines Sitzbenutzers verläuft und Funktionselemente aufweist, die zumindest teilweise der Komforterhöhung dienen und/oder im Rahmen des Betriebes, insbesondere Flugbetriebes, für diesen geeignet sind.

Dabei zeigt die DE 203 17 794 U1 ein Fahrzeugsitzsystem gemäß des Oberbegriffs des Anspruchs 1, nämlich mit Sitzkomponenten wie Rückenlehne und Sitzteil, das zumindest an einer Seite durch eine eine Armlehne bildende Konsole begrenzt ist, wobei ein armartiges Funktionsteil vorhanden ist, das auskragend zumindest teilweise oberhalb der Kopfebene eines Sitzbenutzers verläuft und Funktionselemente aufweist, die zumindest teilweise der Komforterhöhung dienen und im Rahmen des Betriebes für diesen geeignet sind. Dabei ist das Funktionselement als eine Haube ausgebildet, die in einem zurückgekippten Zustand der Rückenlehne gespannt wird und eine Privatsphäre und dadurch einen Komfort eines Passagiers erhöht.

Sie stellt den nächstliegenden Stand der Technik dar. Bekanntermaßen ist es bei Fahrzeugen, die zur Personenbeförderung vorgesehen sind, namentlich bei Luftfahrzeugen gewerblicher Luftfahrtunternehmen; von besonderer Bedeutung, dass die Sitzsysteme so gestaltet sind, dass der zur Verfügung stehende Kabinenraum einerseits bestmöglich ausgenutzt wird, andererseits jedoch ein Höchstmaß an Funktionalität und Komfort für die Sitzbenutzer zur Verfügung gestellt wird. Um den zu stellenden Anforderungen gerecht zu werden, weisen die derzeit üblichen Sitzsysteme eine eine Vielzahl von integrierten, angebauten oder am benachbarten Sitzsystem, namentlich an der Rückseite des in Reiserichtung oder entgegen der Reiserichtung nächstfolgenden Sitzsystem, angebrachte Zusatzeinrichtungen auf. So betrifft die DE 19541 567 C1 beispielhaft einen Fluggastsitz, der seitlich insbesondere zu einem benachbarten Sitz hin orientiert durch eine eine Armlehne bildende Konsole begrenzt ist, aus der sich fächerartig eine Trennwand herausziehen und in der Gebrauchslage festlegen läßt, um dergestalt einen persönlichen Bereich des Sitzbenutzers gegenüber benachbarten Bereichen herzustellen.

Des weiteren ist es durch die US 5,709,360 bekannt, die Mittelarmkonsole eines Fluggastsitzes anstelle einer Trennwand mit einer Bildschirmeinheit auszustatten, die mittels eines Tragarmes aus ihrer Bevorratungsstellung in der Mittelkonsole in eine Gebrauchsstellung ausschwenkbar ist. Der dahingehend schwenkbare Tragarm ist in vorgebbaren Raststellungen festlegbar und ermöglicht neben einer ersten Schwenkrichtung an seinem freien Ende eine weitere zweite Schwenkrichtung für die Bildschirmeinheit. Eine vergleichbare Bildschirm-Schwenkeinheit ist in der EP 0 368 609 A2 offenbart, bei der eine am freien Ende eines Tragarmes angelenkte Bildschirmeinheit aus einer Nichtgebrauchsstellung, gebildet durch den Abstand zweier in Reihe nebeneinander angeordneter Rückenlehnen von Fluggastsitzen, in eine Gebrauchsstellung nach vorne ausschwenkbar ist, um dergestalt beiden nebeneinander sitzenden Sitzbenutzern eine Sehmöglichkeit auf den Bildschirm zu schaffen.

Bei den dahingehend beschriebenen Sitzsystemen ist eine aufwendige Bauweise notwendig, um die Trennwand und Monitor-Schwenkeinrichtungen sinnfällig unterzubringen, was einer optimalen Ausnutzung des zur Verfügung stehenden Kabinenraumes abträglich ist.

Demgemäß schlägt die gattungsbildende US 2003/0064623 A1 bei einem Fluggastsitz vor, im kopfnahen Bereich eines Sitzbenutzers und oberhalb oder seitlich an der Rückenlehne angeordnet als armartiges Funktionsteil eine Schwanenhalslösung vorzusehen, an deren freiem Ende ein Funktionsteil angeordnet ist, sei es in Form einer Beleuchtungseinrichtung, sei es in Form einer Anschlußmöglichkeit für eine Rechnereinheit, insbesondere in Form eines Personal-Computors. Die dahingehende Lösung hat ihren Vorteil darin, dass der jeweilige Sitzbenutzer von Hand sich den Schwanenhals derart zurechtbiegen kann, dass das Funktionsteil von seiner Lage her seinen ergonomischen Bedürfnissen gerecht wird. Der Erhalt einer Multifunktionslösung ist aber dergestalt nicht möglich und in Abhängigkeit der Position des Schwanenhalses wird die dahingehende Lösung gegebenenfalls von Sitznachbarn als störend empfunden. Auch benötigt die bekannte Lösung im Bereich der Oberseite der Rückenlehne viel Einbauraum und wirkt wenig ästhetisch in der praktischen Ausgestaltung.

Die Erfindung stellt sich angesichts dieser Gegebenheiten die Aufgabe, ein Fahrzeugsitzsystem zur Verfügung zu stellen, das eine verbesserte Raumausnutzung ermöglicht, ohne dass hierfür Einbußen an Funktionalität und/oder dem Sitzbenutzer gebotener Bequemlichkeit in Kauf genommen werden müßten. Auch wird eine Erhöhung an Einsatzmöglichkeiten im Sinne einer Multifunktionslösung angestrebt.

Bei einem Fahrzeugsitzsystem der eingangs genannten Art ist diese Aufgabe erfindungsgemäß dadurch gelöst, dass das armartige Funktionsteil eine Erweiterung der Konsole bildet und sich vom Bereich der Rückenlehne ausgehend oberhalb der Konsole in Verlängerung derselben nach vorn erstreckt, und dass das armartige Funktionsteil als starrer Bügel ausgebildet ist. Das armartige Funktionsteil erstreckt sich somit bei Sitzen, bei denen der Sitzteil seitlich durch eine eine Armlehne bildende Konsole begrenzt ist, vorzugsweise in Form einer Erweiterung der Konsole vom Bereich der Rükkenlehne ausgehend oberhalb der Armlehne nach vorn. Die dahingehende Lösung ist nicht nur ästhetisch ansprechend, sondern wird von den Sitzbenutzern auch als Bestandteil des Sitzes verstanden und somit als wenig störend empfunden, im Gegensatz zu den bekannten Lösungen mit ihren Anbauteilen mit Zusatzfunktion.

Dadurch, dass erfindungsgemäß Funktionselemente, wie sie bei den üblichen Sitzsystemen in verhältnismäßig großer Zahl vorhanden sein können, in ein über Kopf angeordnetes starres, bügelartiges Bauteil verlagert sind, ergibt sich für die verbleibenden eigentlichen Sitzkomponenten eine einfachere und kompaktere Bauweise, was wiederum zu einer besseren Raumausnutzung, ohne Beeinträchtigung der Funktionalität oder des Komforts beiträgt. Ohnehin läßt sich dergestalt in den starren Bügel eine ausgesprochen hohe Anzahl an Funktions- und Bedienelementen unterbringen. So kann das armartige Funktionsteil als der Kömforterhöhung dienende Funktionselemente beispielsweise einen Trinkgefäß- oder Flaschenhalter und/oder einen Handgriff als Aufstehhilfe für Senioren oder behinderte Sitzbenutzer und/oder zumindest ein Staufach für Reiseutensilien und/oder einen Halter für die lageeinstellbare Anbringung eines Bildschirmes aufweisen.

Die lageeinstellbare Anbringung eines Fernsehmonitors an einem über Kopf befindlichen Funktionsteil des jeweils zugehörigen Sitzes hat gegenüber der üblichen Anbringung des Monitors an der Rückseite des davor befindlichen Sitzes nicht nur den Vorteil, dass durch die Einstellbarkeit des Monitors eine gute Sicht in jeder Sitzposition geboten wird, sondern es entfällt in besonders vorteilhafter Weise die Verkabelung zwischen Sitz und nächstvorderem Sitz,

Als weitere Funktionselemente, die zur Komforterhöhung in das armartige Funktionselement integriert werden können, kommen unter anderem Leselicht, Frischluftdüsen oder solche Funktionselemente in Betracht, die der Verbesserung des Wohlgefühls des Sitzbenutzers durch Schaffung einer Privatsphäre dienen. In Betracht kommen hierfür beispielsweise Trennelemente, die als sogenannter "privacy divider" eine Abschirmung gegenüber dem jeweils benachbarten Sitz bilden. Hierbei kann ein Trennelement in Form eines sich an das armartige Funktionsteil anschließenden, ausziehbaren Rollos vorgesehen sein.

Als betriebliche, namentlich flugbetriebliche Funktionselemente kommen am armartigen Funktionsteil Bedienelemente in Betracht, die für Einstellungen, insbesondere Sitzeinstellungen vorgesehen sind, und/oder eine Aufnahme für eine Sauerstoffmaske und/oder ein Anschluß für ein in einem Abstand vom armartigen Funktionsteil bedienbares Mehrfunktions-Steuergerät und/oder eine Aufhängung für Kopfhörer und/oder eine Markierung zur Sitzplatznumerierung und dergleichen.

Ebenfalls in Frage kommen Anzeigeleuchten, etwa für Stewardruf, PC-Stromversorgung und dergleichen.

Wenn es sich bei der Konsole um eine Mittelkonsole handelt, die die Armlehne zwischen zwei nebeneinander liegenden Sitzen bildet, dann kann das sich oberhalb der Mittelkonsole erstreckende armartige Funktionsteil, wenn es sich um ein doppelsitziges Sitzsystem handelt, beiden nebeneinander liegenden Sitzen als Funktionselement zugeordnet sein.

Das armartige Funktionsteil ist in der Form eines Bügels ausgestaltet, beispielsweise in geschwungener Form, etwa näherungsweise in der Art eines Kreisbogenabschnittes. Dabei kann es sich um einen starren Bügel oder um einen gestaltsveränderlichen Bügel aus starren Bügelabschnitten handeln, die beispielsweise teleskopartig verkürzbar oder ausziehbar gestaltet sind. Jedenfalls ist in Ausgestaltung einer biege- und torsionssteifen Anordnung der starre Bügel in der Art eines Tragholmes ausgebildet und hat einen im Querschnitt vorzugsweise rechteckförmigen Verlauf. Als gewichtstechnisch hat es sich auch als besonders günstig erwiesen, dafür Sorge zu tragen, dass der allgemein rechteckförmige Querschnitt zum freien Ende hin in einen quadratischen Querschnitt ausläuft. So ist dergestalt auch eine besonders erhöhte Festigkeit im Bereich des Fußteils gewährleistet und im Kopfbereich des jeweiligen Sitzbenutzers verjüngt sich der Tragholm, so dass dort viel Raum zur Verfügung steht, beispielsweise zum Bereitstellen einer Bildschirm- oder Monitoreinheit.
Je nach Gegebenheiten oder Erfordernissen kann der Bügel fest angebracht oder versenkbar angeordnet sein. Letztere Anordnung ist bevorzugt, wenn es sich um einen starren, einstückigen Bügel handelt. Bei derartigen Ausführungsbeispielen kann der Bügel zum Versenken in die zugehörige Konsole einklappbar sein. Alternativ kann der Bügel, wenn er im Bereich der Rükkenlehne des betreffenden Sitzes an der zugehörigen Konsole angelenkt ist, in der Weise versenkbar gelagert sein, dass er durch eine kombinierte Schwenk- und Verschiebebewegung in die Struktur der Rückenlehne einfahrbar ist.

Nachstehend ist die Erfindung anhand von in der Zeichnung dargestellten Ausführungsbeispielen im einzelnen erläutert. Es zeigen:
- Fig. 1 eine stark schematisch vereinfacht und perspektivisch gezeichnete Darstellung eines Ausführungsbeispieles des erfindungsgemäßen Sitzsystems in Form eines Fluggast-Doppelsitzes;
- Fig. 2 und 3 gegenüber Fig. 1 in kleinerem Maßstab, stark schematisch vereinfacht und perspektivisch gezeichnete schräge Teilansichten zweier weiterer Ausführungsbeispiele des erfindungsgemäßen Sitzsystems, gesehen auf die Rückenlehnen-Rückseite;
- Fig. 4 und 5 den Fig. 2 und 3 ähnliche, schräge, perspektivische Teilansichten zweier weiterer Ausführungsbeispiele, jedoch gesehen auf die Sitzvorderseite;
- Fig. 6 eine gegenüber den vorausgehenden Fig. in größerem Maßstab, stark schematisch und perspektivisch gezeichnete Teilansicht eines weiteren Ausführungsbeispieles;
- Fig. 7 eine in etwa gleichem Maßstab wie Fig. 6 gezeichnete, stark schematisch vereinfacht gezeichnete, schräge, perspektivische Teilansicht eines weiteren Ausführungsbeispieles mit von der Rückenlehnenstruktur teilweise abgenommener Rückenlehnenpolsterung;
- Fig. 8 eine etwa im Maßstab von Fig. 7 gezeichnete, schematische, perspektivische Teilansicht lediglich des armartigen Funktionsteiles eines weiteren Ausführungsbeispieles;
- Fig. 9 eine gegenüber in Fig. 8 in noch größerem Maßstab, stark schematisiert und perspektivisch gezeichnete Darstellung eines weiteren Ausführungsbeispieles, wobei lediglich der dem Endbereich des armartigen Funktionsteiles benachbarte Bereich gezeigt ist;
- Fig. 10 eine gegenüber Fig. 9 in kleinerem Maßstab, stark schematisch vereinfacht und perspektivisch gezeichnete schräge Teilansicht eines weiteren Ausführungsbeispieles gesehen auf die Sitzvorderseite, und
- Fig. 11 eine gegenüber Fig. 10 in kleinerem Maßstab, stark schematisch vereinfacht und perspektivisch gezeichnete schräge Teilansicht eines weiteren Ausführungsbeispieles, gesehen auf die Sitzvorderseite.

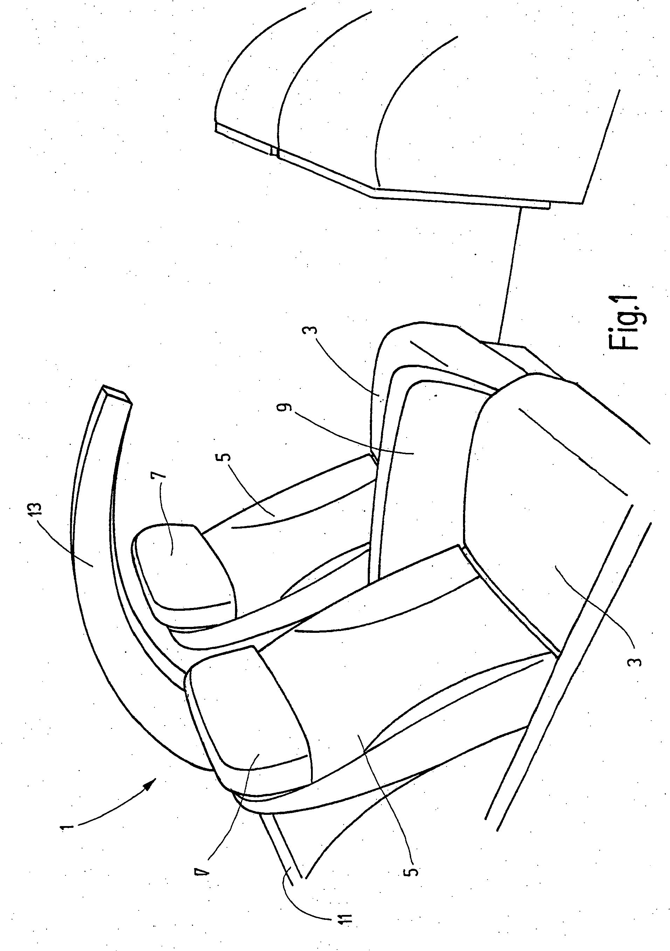

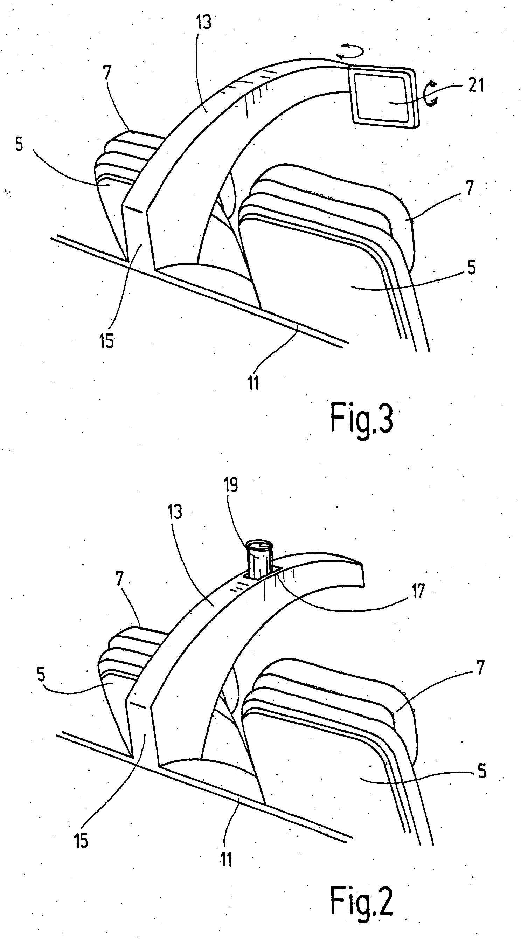

Fig. 1 zeigt ein Ausführungsbeispiel des erfindungsgemäßen Sitzsystems in Form eines als Ganzes mit 1 bezeichneten Fluggast-Doppelsitzes. Von den Sitzkomponenten des Doppelsitzes 1 sind lediglich die Sitzteile 3, die Rükkenlehnen 5 mit Kopfpolstern 7, eine als Armlehne zwischen den Sitzteilen befindliche Mittelkonsole 9 sowie eine Trägerstruktur 11 schematisch angedeutet. Außerdem weist das erfindungsgemäße Sitzsystem ein armartiges Funktionsteil auf, das sich in Form eines geschwungenen Bügels 13 auf einem Großteil seiner Länge oberhalb der Ebene der Kopfpolster 7 erstreckt. Ausgehend von seinem hinteren Ende, das in Fig. 2 und 3 zu sehen, mit der Bezugszahl 15 bezeichnet und mit der Trägerstruktur 11 verbunden ist, erstreckt sich der Bügel 13 bogenförmig gekrümmt und vom Ende 15 weg auskragend in Flugrichtung nach vorn, wobei er sich in der Hauptebene der Mittelkonsole 9 oberhalb derselben erstreckt und bei dem Ausführüngsbeispiel von Fig. 1, ebenso wie bei weiteren gezeigten Ausführungsbeispielen, sozusagen eine über Kopf angeordnete Erweiterung der Mittelkonsole 9 bildet.

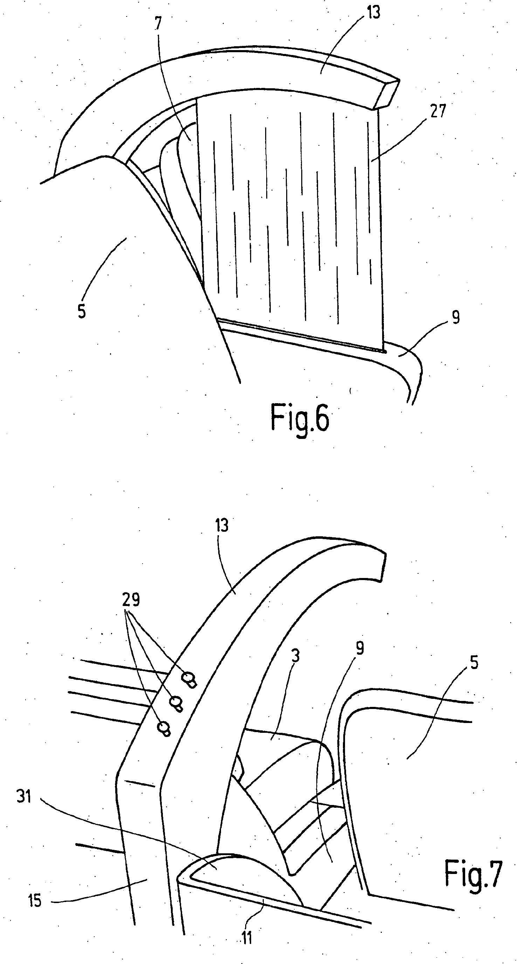

Bei den in Fig. 2 und 3 dargestellten Lösungen ist der Bügel 13 mit seinem hinteren Ende 15 jeweils mit der Trägerstruktur 11 des Sitzsystems verbunden. Diese Verbindung kann auf verschiedene Weise gestaltet sein, beispielsweise in Form einer festen Verbindung, die in optionaler Ausgestaltung und lösbar sein kann. Letzteres dient der Erhöhung der Modularität des Gesamtsystems. Alternativ kann eine ein Abklappen des Bügels ermöglichende verriegelbare Schwenkbewegung vorgesehen sein. Wie unten unter Bezugnahme auf das Ausführungsbeispiel von Fig. 7 noch näher ausgeführt wird, kann der Bügel 13 mit seinem Ende 15 auch in einer an der Mittelkonsole 9 oder der Trägerstruktur 11 befindlichen, eine begrenzende Schwenkbewegung ermöglichenden Verschiebeführung gelagert sein, so dass der Bügel 13 durch eine kombinierte Schwenk- und Verschiebebewegung in die Mittelkonsole 9 oder die Trägerstruktur 11 einfahrbar und darin versenkbar ist. Abklappbare oder versenkbare Lagerung des Bügels 13 ist von besonderem Vorteil, wenn es sich um einen starren Bügel 13 handelt. Eine feste Verbindung des Endes 15 des Bügels 13 mit dem zugeordneten Strukturelement ist jedoch in den Fällen vorteilhaft, bei denen der Bügel 13 kein festes Bauteil bildet, sondern formveränderlich ist, beispielsweise indem der Bügel 13 so aufgebaut ist, dass er durch teleskopartiges Zusammenfahren verkürzbar und in die in den Fig. dargestellte Gebrauchsstellung ausziehbar ist.

Fig. 2 zeigt ein Ausführungsbeispiel, bei dem der Bügel 13 an seiner Oberseite einen Halter 17 für ein Trinkgefäß 19 oder eine Flasche aufweist.

Fig. 3 zeigt ein Beispiel der Lagerung eines Flachbildschirmes 21 am vorderen Endbereich des Bügels 13, wobei die Aufhängung so gestaltet ist, dass eine Lageeinstellung des Bildschirmes 21 um zwei zueinander senkrechte Achsen ermöglicht ist, so dass der betreffende Sitzbenutzer bei allen möglichen Sitzeinstellungen eine gute Sicht auf dem Bildschirm 21 hat.

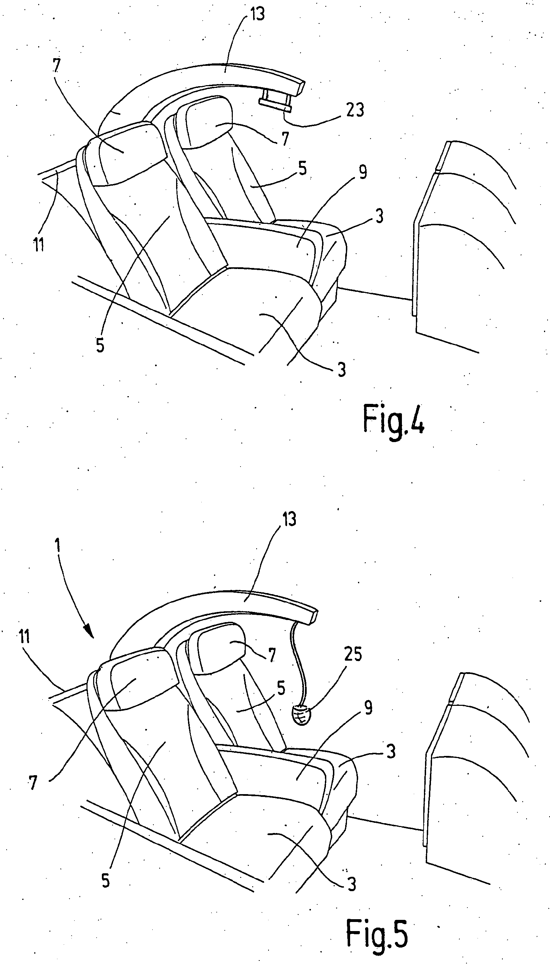

Fig. 4 zeigt ein Beispiel, bei dem am vorderen Endbereich des Bügels 13 ein Handgriff 23 als Aufstehhilfe für Senioren oder Sitzbenutzer mit einem Handicap angebracht ist.

Fig. 5 zeigt wiederum ein Beispiel, bei dem der Bügel 13 in seinen vorderen Abschnitt ein Fach für die Unterbringung von Sauerstoffmasken aufweist, von denen je eine für jeden Sitz des Doppelsitz-Systems 1 vorgesehen ist, wobei in Fig. 5 lediglich eine Sauerstoffmaske 25 eingezeichnet ist, die aus dem Fach freigegeben und herabgefallen ist.

Fig. 6 zeigt eine Variante, bei der der sich oberhalb der Mittelkonsole 9 erstreckende Bügel 13 mit einem Rollo 27 versehen ist, der aus dem Bügel 13 ausziehbar und bis zur Mittelkonsole 9 herabziehbar ist. In der in Fig. 6 gezeigten, zur Mittelkonsole 9 herab gezogenen Stellung bildet der Rollo 27 ein Trennelement zwischen den nebeneinander liegenden Sitzen und trägt somit zur Komforterhöhung bei, indem er für den betreffenden Sitzbenutzer eine Privatsphäre schafft.

Fig. 7 zeigt eine Lösung, bei der der Bügel 13 an seiner Oberseite manuell betätigbare Bedien- und Steuerelemente in Form von Drucktasten 29 aufweist. Dabei handelt es sich um solche Bedien- und Steuerelemente, wie sie bei dem bekannten Sitzsystemen üblicherweise in den die seitliche Begrenzung des Sitzteiles bildenden Konsolen integriert sind. Die Verlagerung solcher Elemente in den Bügel 13, wie auch die Verlagerung der weiteren, in Frage kommenden Funktionselemente in den Bügel 13, eröffnet die vorteilhafte Möglichkeit, die betreffende Konsole, namentlich die Mittelkonsole 9 zwischen angrenzenden Sitzen, entsprechend schmäler ausbilden zu können, was eine kompaktere Gestaltung des Sitzsystems ohne Einbuße an Funktionalität ermöglicht, was durch bessere Ausnutzung vorhandenen Kabinenraumes von sehr großer wirtschaftlicher Bedeutung ist.

Fig. 7 zeigt außerdem die Anordnung des hinteren Endes 15 des Bügels 13 an einem anliegenden Randteil 31 der Trägerstruktur 11. Wie bereits oben angedeutet, kann die Verbindung zwischen dem Ende 15 des Bügels 13 und der Trägerstruktur 11 mittels einer kombinierten Schwenk- und Verschiebeführung erfolgen, die zwischen dem Wandteil 31 und dem ihm gegenüberliegenden, in Fig. 7 nicht gezeigten, entsprechenden Wandteil der Trägerstruktur des angrenzenden Sitzes eingebaut ist und das Versenken des Bügels 13 durch eine kombinierte Schwenk- und Einfahrbewegung nach hinten ermöglicht.

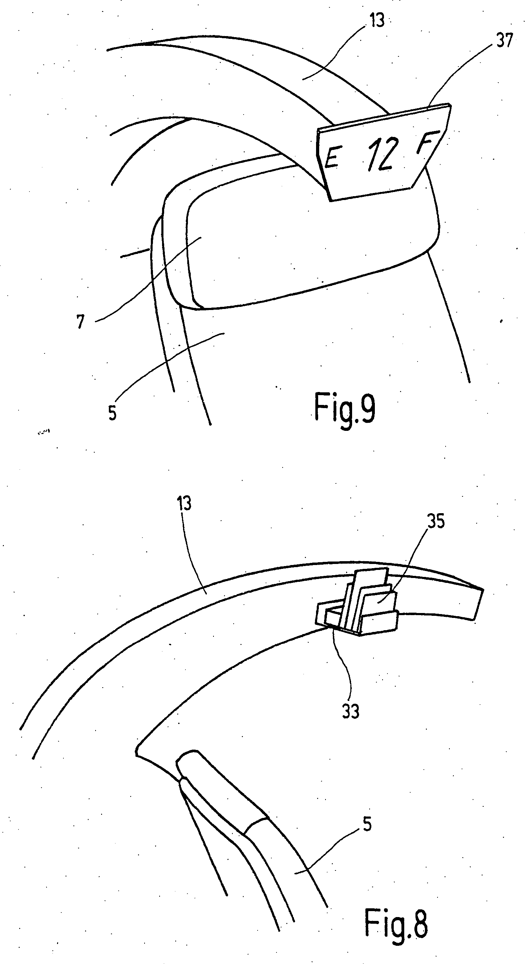

Fig. 8 zeigt ein weiteres Ausführungsbeispiel, bei dem der Bügel 13 ein ausziehbares Fach 33 für Reiseuntensilien 35 aufweist.

Fig. 9 zeigt eine Ausführungsform, bei der der Bügel 13 sich nicht in der Ebene einer den Sitz seitlich begrenzenden Konsole erstreckt, sondern zentral oberhalb des betreffenden Sitzes verläuft. Wie dargestellt, befindet sich am vorderen Ende des Bügels 13 ein Schild 37 als Sitzplatznummerierung.

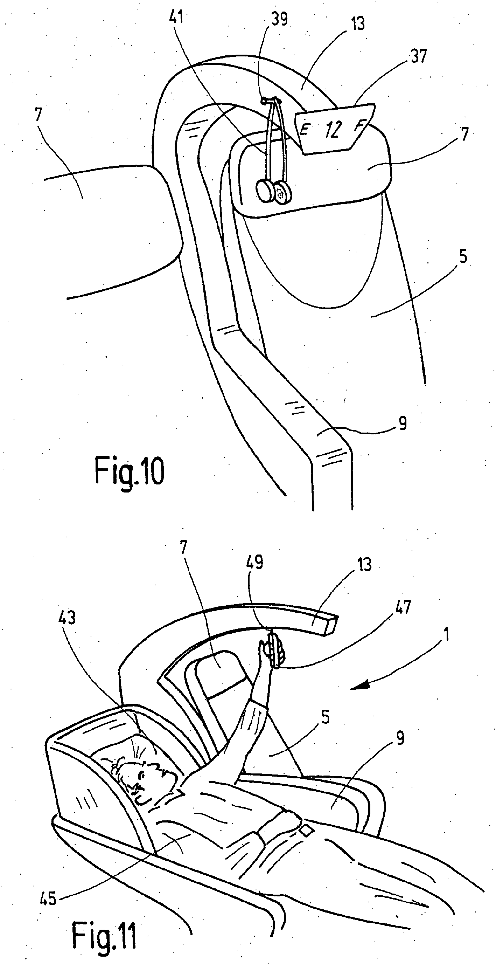

Bei dem in Fig. 10 gezeigten Ausführungsbeispiel, bei dem das vordere Ende des Bügels 13 ebenfalls mit einem Schild 37 versehen ist, ist der Bügel 13 mit der Mittelkonsole 9 an deren hinterem Ende fest verbunden, so dass der Bügel 13 eine sich vom hinteren Ende der Konsole 9 nach oben erstrekkende Erweiterung der Konsole 9 bildet. Der Bügel 13 weist als weiteres Funktionselement Haken 39 zur Aufhängung von Kopfhörern 41 auf, wobei lediglich ein Haken 39 mit daran befindlichem Kopfhörer 41 gezeigt ist.

Fig. 11 zeigt schließlich ein Beispiel, bei dem der Bügel 13 in gleicher Weise wie bei Fig. 10 eine feste Erweiterung der Mittelkonsole 9 bildet, wobei jedoch einer der beiden Sitze des Doppelsitzes 1 als Liegesitz 43 in die Liegeposition gebracht ist. Um zu ermöglichen, dass der Sitzbenutzer 45, auch wenn er die Liegeposition eingenommen hat, die für das Sitzsystem vorgesehenen Bedien- und Steuerelemente bequem erreichen und bedienen kann, weist der Bügel 13 als Funktionselement ein Mehrfunktionssteuergerät 47 auf, das mit dem Bügel 13 über eine ausziehbare Kabelverbindung 49 gekoppelt ist, somit in einem Abstand vom Bügel 13 betätigt werden kann und dem Sitzbenutzer 45 damit ermöglicht, die in Frage kommenden Steuer- und/oder Bedienungsbefehle bequem ausführen zu können, selbst in Liegeposition.

Der starre Bügel 13 als armartiges Funktionsteil ist in der Art eines Holmes oder Tragholmes ausgebildet und hat einen im Querschnitt rechteckförmigen Verlauf. Ferner ist vorgesehen, dass der allgemein rechteckförmige Querschnitt zum freien Ende hin in einen quadratischen Querschnitt ausläuft, so dass an seinem Fußteil der Bügel 13 starr verankert ist und zu seinem freien Ende hin mit sich verjüngendem Querschnitt dennoch die notwendige Stabilität aufweist, um bewegungsresistent zu sein. Insbesondere ist die dahingehende Anordnung unempfindlich gegen Schwingungen. Der Bügel 13 ist vorzugsweise als Hohlprofil ausgebildet und weist neben einem Oberzug und einem Unterzug zwei seitlich auf Abstand verlaufende Querzüge auf. Sowohl der Oberzug als auch der Unterzug sind kreisbogenförmig ausgebildet, wobei der Unterzug eine stärkere, insbesondere konkave Krümmung aufweist gegenüber dem schwächer gekrümmten Oberzug, der derart konvex ausgebildet ist. Die seitlich angeordneten Querzüge sind flächig ausgebildet und verlaufen um Ober- und Unterzug beabstandet parallel zueinander. Bei einer nicht näher dargestellten Ausführungsform könnte es auch vorgesehen sein, im Sinne einer Trapezausbildung den Unterzug zu verbreitern, was die mögliche Torsionssteifigkeit weiter erhöht.

Wie bereits erwähnt, entfällt, da sämtliche für ein betreffendes Sitzsystem in Frage kommende Funktionselemente an dem über Kopf gelegenen Bügel zusammengefaßt werden können, in vorteilhafter Weise die Notwendigkeit, Kabelverbindungen zum benachbarten Vordersitz vorzusehen, wie dies üblicherweise erforderlich ist, wenn an der Rückseite des Vordersitzes elektrische Geräte, wie Bildschirm, Telefon und dergleichen angebracht sind. Auch versteht sich, dass am Bügel 13 nicht nur die in den gezeigten Beispielen vorgesehenen Funktionselemente angeordnet sein können, sondern beliebige Kombinationen mit einer Vielzahl von innerhalb des Bügels befindlichen oder am Bügel angebrachten Elementen.

## Patentansprüche

1. Fahrzeugsitzsystem, insbesondere für Luftfahrzeuge, mit Sitzkomponenten wie Rückenlehne (5) und Sitzteil (3), das zumindest an einer Seite durch eine eine Armlehne bildende Konsole (9) begrenzt ist, wobei ein als starrer Bügel ausgebildetes armartiges Funktionsteil (13) vorhanden ist, das auskragend zumindest teilweise oberhalb der Kopfebene eines Sitzbenutzers (45) verläuft und Funktionselemente aufweist, die zumindest teilweise der Komforterhöhung dienen und/oder im Rahmen des Betriebes, insbesondere Flugbetriebes, für diesen geeignet sind, **dadurch gekennzeichnet, dass** das armartige Funktionsteil (13) eine Erweiterung der Konsole (9) bildet und sich vom Bereich der Rückenlehne (5) ausgehend oberhalb der Konsole (9) in Verlängerung derselben nach vorn erstreckt.

2. Sitzsystem nach Anspruch 1, **dadurch gekennzeichnet, dass** das armartige Funktionsteil (13) als der Komforterhöhung dienende Funktionselemente einen Trinkgefäß- oder Flaschenhalter (17) und/oder einen Handgriff (23) als Aufstehhilfe für Sitzbenutzer (45) und/oder zumindest ein Staufach (33) für Reiseutensilien (35) und/oder einen Halter für die lageverstellbare Anbringung eines Flachbildschirmes oder Bildschirmes (21) aufweist.

3. Sitzsystem nach Anspruch 1 oder 2, **dadurch gekennzeichnet, dass** das armartige Funktionsteil (13) als der Komforterhöhung dienende Funktionselemente solche (27) aufweist, die der Verbesserung des Wohlgefühls des Sitzbenutzers (45) durch Schaffung einer Privatsphäre dienen.

4. Sitzsystem nach Anspruch 3, **dadurch gekennzeichnet, dass** zumindest ein Trennelement in Form eines sich an das armartige Funktionsteil (13) anschließenden, ausziehbaren Rollos (27) vorgesehen ist.

5. Sitzsystem nach einem der Ansprüche 1 bis 4, **dadurch gekennzeichnet, dass** als im Rahmen des Betriebes, insbesondere des Flugbetriebes, geeignete Funktionselemente am armartigen Funktionsteil (13) Bedienelemente (29) für Einstellungen, insbesondere Sitzeinsteilungen, und/oder eine Aufnahme für mindestens eine Sauerstoffmaske (25) und/oder ein Anschluss (49) für ein in einem Abstand vom armartigen Funktionsteil (13) bedienbares Mehrfunktions-Steuergerät (47) und/oder eine Aufhängung (39) für Kopfhörer (41) und/oder eine Markierung (37) zur Sitzplatznummerierung aufweist.

6. Sitzsystem nach einem der Ansprüche 1 bis 5, **dadurch gekennzeichnet, dass** der starre Bügel als armartiges Funktionsteil (13) in der Art eines Holmes ausgebildet einen im Querschnitt rechteckförmigen Verlauf hat.

7. Sitzsystem nach Anspruch 6, **dadurch gekennzeichnet, dass** der allgemein rechteckförmige Querschnitt zum freien Ende hin in einen quadratischen Querschnitt ausläuft.

8. Sitzsystem nach einem der Ansprüche 1 bis 7, **dadurch gekennzeichnet, dass** die Konsole eine die Armlehne zwischen zwei nebeneinanderliegenden Sitzen bildende Mittelkonsole (9) ist.

9. Sitzsystem nach Anspruch 8, **dadurch gekennzeichnet, dass** der Bügel (13) fest angebracht und optional lösbar ist.

10. Sitzsystem nach einem der Ansprüche 8 oder 9, **dadurch gekennzeichnet, dass** der Bügel (13) versenkbar angeordnet ist.

11. Sitzsystem nach Anspruch 10, **dadurch gekennzeichnet, dass** der Bügel (13) durch Einklappen in die eine Armlehne bildende Konsole (9) versenkbar ist.

12. Sitzsystem nach Anspruch 10, **dadurch gekennzeichnet, dass** der Bügel 15 (13) durch Einfahren in die Struktur (11) der zugehörigen Rückenlehne/Rückenlehnen (5) versenkbar ist.

## Claims

1. Vehicle seating system, in particular for aircraft, with seat components such as a backrest (5) and a seat part (3), which is delimited at least on one side by a console (9) forming an armrest, an arm-like operating part (13) being implemented as a rigid bracket and extending in such a way that it at least partially projects above the plane of the head of a seat user (45) and comprising functional elements which at least partially serve for increased comfort and/or are, in a context of operation, in particular flight operation, suitable therefor, **characterised in that** the arm-like operating part (13) forms an extension of the console (9) and extends forward, proceeding from the region of the backrest (5), above the console (9) in a prolongation of said console (9).

2. Seating system according to claim 1, **characterised in that** the arm-like operating part (13) comprises, as functional elements serving for increased comfort, a beverage-container or bottle holder (17) and/or a handle (23) as a getting-up aid for a seat user (45) and/or at least one stowage compartment (33) for travel items (35) and/or a holder for mounting a flat screen or screen (21) in a position-adjustable fashion.

3. Seating system according to claim 1 or 2, **characterised in that** the arm-like operating part (13) comprises, as functional elements serving for increased comfort, such functional elements (27) which serve for an improved well-being of the seat user (45) by creating privacy.

4. Seating system according to claim 3, **characterised in that** at least one separating element is provided, which is embodied as a pull-out roller blind (27) adjoining the arm-like operating part (13).

5. Seating system according to one of claims 1 to 4, **characterised in that** the arm-like operating part (13) comprises, as functional elements on the arm-like operating part (13) which are suitable in a context of operation, in particular flight operation, operating elements (29) for adjustments, in particular seat adjustments, and/or a receptacle for at least one oxygen mask (25) and/or a connection (49) for a multi-functional control device (47) that is operable at a distance from the arm-like operating part (13) and/or a suspension (39) for headphones (41) and/or a marking (37) for seat numeralization.

6. Seating system according to one of claims 1 to 5, **characterised in that** the rigid bracket as the arm-like operating part (13), which is implemented like a bar, extends having a rectangular cross section.

7. Seating system according to claim 6, **characterised in that** the generally rectangular cross section ends in a square cross section towards the free end.

8. Seating system according to one of claims 1 to 7, **characterised in that** the console is a centre console (9) forming the armrest between two neighbouring seats.

9. Seating system according to claim 8, **characterised in that** the bracket (13) is fixedly mounted and optionally releasable.

10. Seating system according to one of claims 8 or 9, **characterised in that** the bracket (13) is arranged to be retractable.

11. Seating system according to claim 10, **characterised in that** the bracket (13) is retractable by folding back into the console (9) forming an armrest.

12. Seating system according to claim 10, **characterised in that** the bracket (13) is retractable by retraction into the structure (11) of the corresponding backrest/backrests (5).

## Revendications

1. Ensemble de sièges pour véhicule, en particulier pour aéronef, avec des composants de siège comme dossier (5) et élément de siège (3), lequel est délimité au moins à un côté par une console (9) formant un appuie-bras, et dans lequel il y a une pièce fonctionnelle similaire à un bras (13), laquelle est implémentée comme étrier rigide et s'étend de manière saillant au moins partiellement au-dessus du plan de tête d'un usager de siège (45) et comporte des éléments fonctionnels servant au moins partiellement pour augmenter le confort et/ou appropriés dans le cadre de ladite opération, en particulier d'une opération aéronautique, , **caractérisé en ce que** la pièce fonctionnelle similaire à un bras (13) forme une extension de la console (9) et s'étend, partant de la zone du dossier (5), en avant, au-dessus de la console (9) comme prolongement de ladite console (9).

2. Ensemble de sièges selon la revendication 1, **caractérisé en ce que** la pièce fonctionnelle similaire à un bras (13) comporte, comme d'éléments fonctionnels pour augmenter le confort, un porte-récipient à boisson ou porte-bouteille (17) et/ou une poignée (23) comme aide pour se lever pour les usagers de siège (45) et/ou au moins un compartiment de rangement (33) pour des articles à voyage (35) et/ou une fixation pour monter un écran plat ou écran (21) à position ajustable.

3. Ensemble de sièges selon la revendication 1 ou 2, **caractérisé en ce que** la pièce fonctionnelle similaire à un bras (13) comporte, comme d'éléments fonctionnels pour augmenter le confort, tels éléments (27) quels servent à l'amélioration du bien-être de l'usager de siège (45) par le biais de la création d'une sphère privée.

4. Ensemble de sièges selon la revendication 3, **caractérisé en ce qu'**au moins un élément de séparation est prévu dans la forme d'un volet roulant (27) extractible, contigu á la pièce fonctionnelle similaire à un bras (13).

5. Ensemble de sièges selon l'une quelconque des revendications 1 à 4, **caractérisé en ce que** la pièce fonctionnelle similaire à un bras (13) comporte, comme des éléments fonctionnels à la pièce fonctionnelle similaire à un bras (13), appropriés dans le cadre de l'opération, en particulier de l'opération aéronautique, des organes opératifs (29) pour des ajustements, en particulier des ajustements de siège, et/ou un réceptacle pour au moins un masque à oxygène (25) et/ou un raccordement (49) pour un dispositif de commande multifonctionnel (47) opérable à une distance de la pièce fonctionnelle similaire à un bras (13) et/ou une suspension (39) pour des casques d'écoute (41) et/ou un marquage (37) pour la numérotation du siège.

6. Ensemble de sièges selon l'une quelconque des revendications 1 à 5, **caractérisé en ce que** l'étrier rigide, lequel est implémenté comme pièce fonctionnelle similaire à un bras (13) de façon d'une barre, s'étend avec une coupe transversale de forme rectangulaire.

7. Ensemble de sièges selon la revendication 6, **caractérisé en ce que** la coupe transversale de forme généralement rectangulaire finit vers une extrémité libre dans une coupe transversale carrée.

8. Ensemble de sièges selon l'une quelconque des revendications 1 à 7, **caractérisé en ce que** la console est une console centrale (9) formant l'appuie-bras entre deux sièges voisins.

9. Ensemble de sièges selon la revendication 8, **caractérisé en ce que** l'étrier (13) est monté de façon fixée et est détachable de façon facultative.

10. Ensemble de sièges selon l'une quelconque des revendications 8 ou 9, **caractérisé en ce que** l'étrier (13) est disposée de façon escamotable.

11. Ensemble de sièges selon la revendication 10, **caractérisé en ce que** l'étrier (13) est escamotable par repliement dans la console (9) formant un appuie-bras.

12. Ensemble de sièges selon la revendication 10, **caractérisé en ce que** l'étrier (13) est escamotable par rétraction dans la structure (11) du dossier/des dossiers (5) correspondant/correspondants.
